# EUROPÄISCHE PATENTANMELDUNG

(11) **EP 3 599 686 A1**
(43) Veröffentlichungstag der Anmeldung: **29.01.2020**
(21) Anmeldenummer: 19188028.5
(22) Anmeldetag: 24.07.2019
(51) Int. Cl.: H02G 3/10, H02G 3/14, H02J 7/00

(54) **HALTERUNG FÜR ELEKTRISCHE KLEINGERÄTE AN EINER NETZSTECKDOSE**

(30) Priorität: 24.07.2018 DE 102018117890
(71) Anmelder: Laibold, Stefan, 97424 Schweinfurt (DE)
(72) Erfinder: Laibold, Stefan, 97424 Schweinfurt (DE)
(74) Vertreter: Gleim, Christian Ragnar

(57) **Zusammenfassung**

Halterung für ein elektrisches oder elektronisches Kleingerät, bestehend aus einem Tragrahmen, der an einer Wand angeordnet ist und der zumindest teilweise wenigstens eine Netzsteckdose und/oder einen Schalter und/oder eine andere, fest montierte Elektrobaugruppe umgreift und der mit wenigstens einem Zwischenmodul verbunden ist, wobei das Zwischenmodul einen Auflagebereich für das Kleingerät aufweist und wobei der Tragrahmen lösbar mit dem Zwischenmodul verbunden ist und der Auflagebereich am Zwischenmodul wenigstens angenähert komplementär zu einem Teilbereich der Außenfläche des Kleingerätes geformt ist.

## Beschreibung

Die Erfindung bezieht sich auf eine Halterung für ein elektrisches oder elektronisches Kleingerät, bestehend aus einem Tragrahmen, der an einer Wand angeordnet ist und der zumindest teilweise wenigstens eine Netzsteckdose und/oder einen Schalter und/oder eine andere, fest montierte Elektrobaugruppe umgreift und der mit wenigstens einem Zwischenmodul verbunden ist, wobei das Zwischenmodul einen Auflagebereich für das Kleingerät aufweist.

Auf aktuellem Stand der Technik sind in elektrische Kleingeräte, wie zum Beispiel Mobiltelefone, Smartphones, Kleinkameras, Baby-Phones, Rasierapparate, Zahnbürsten, Navigationsgeräte, Fahrradbeleuchtungen, Taschenlampen oder Blitzgeräte oft Batterien als Energiequelle eingebaut, die zum Aufladen nicht aus dem Gerät herausgenommen werden, sondern über eine Steckverbindung und ein Ladekabel mit einer Netzsteckdose verbunden werden müssen. Weil die Ladespannung dieser Batterien erheblich niedriger als die Netzspannung ist, ist in den Netzstecker des Ladekabels ein elektronischer Spannungsumsetzer eingebaut, das sogenannte Ladegerät.

Diese Geräte sind zunehmend mit elektronischen Funktionen ausgestattet, die über Kabel, Funkstrecken oder optische Bauelemente mit Netzwerken, Steuerungen, Displays und/oder anderen Geräten verbunden werden.

Die Formgebung der Kleingeräte setzt in aller Regel voraus, dass während des Aufladens und oft auch während der Nutzung eine ebene Ablagefläche für das Kleingerät in der Nähe einer Netzsteckdose zur Verfügung steht. Der Anwender hat selbst dafür zu sorgen, dass ein Tisch, ein Regal oder ein anderes Möbelstück in der Nähe der Steckdose platziert wird. Oder er muss eine Netzsteckdose wählen, deren Abstand zum Fußboden kleiner ist als die Länge des Ladekabels.

Die Anmeldeschrift DE 20 2008 006 884 U1 beschreibt die Frontplatte einer Netzsteckdose, an der eine Ablageplatte gelenkig befestigt ist. Bei Gebrauch wird diese Ablageplatte aus einer vertikalen in eine horizontale Position geschwenkt und dient dann als Ablagefläche für das aufzuladende Kleingerät. Vom Kleingerät ausgehend muss das Ladekabel zu der Netzsteckdose geführt und dort mit dem Netzstecker eingesteckt werden. Ebenso soll ein Funktionskabel, wie z.B. der Anschluss an ein Local Area Network (LAN), das Kleingerät mit einer Wandsteckdose verbinden.

Der wesentliche Nachteil dieses Prinzips ist, dass das Kleingerät auf der Ablageplatte nicht fixiert werden kann. Wenn ein Ladekabel oder Funktionskabel, insbesondere ein fabrikneues, nur begrenzt flexibel ist und sich nicht mit einem relativ kleinen Biegeradius an der Kante der Ablageplatte abwinkeln lässt, kann das dazu führen, dass beim Einstecken des Netzsteckers das wenig flexible Kabel das Kleingerät von der Ablagefläche abhebt, das daraufhin sogar herunterfallen kann.

Als Abhilfe sieht die DE 20 2008 006 884 U1 am Rande der Ablageplatte Kerben vor, in die das Kabel eingelegt werden soll.

Über die relative Steifigkeit des Kabels und den Steckverbinder zum Kleingerät wird dadurch eine begrenzte Fixierung des Kleingerätes auf der Ablagefläche erreicht.

Ein prinzipieller Nachteil ist, dass die Ablageplatte von der Netzsteckdose hinweg in den Raum hineinragt und dadurch das Kleingerät ebenso wie die Ablageplatte selbst vermehrt versehentlichen Berührungen aussetzt. Wenn die dabei wirkenden Kräfte aus der Öffnung der Kerbe für das Kabel hinaus gerichtet sind, können sie das Kleingerät so weit bewegen, dass es von der Ablageplatte herunterfällt.

In andere Richtungen auf das Kleingerät wirkende Kräfte werden über die Steckverbindung und das Kabel in die Ablageplatte geleitet, so dass das Kleingerät trotz der einwirkenden Kraft auf der Ablagefläche liegen bleibt.

Nachteilig ist dabei, dass, die zumeist sehr empfindliche, Steckverbindung mechanisch belastet wird und dadurch schneller verschleißt. Auch das Kabel wird immer wieder gekrümmt und bewegt, wodurch es vorzeitig immer weicher wird und dadurch die einwirkenden Kräfte immer weniger weiterleiten kann. Schlussendlich kann das sogar bis zum Bruch der elektrischen Leitungen im Kabel führen.

Diese Nachteile werden verstärkt, wenn - gemäß dem Vorschlag der 20 2008 006 884 U1 - das Kabel um die Ablagefläche herumgewickelt wird und dazu in zwei gegenüberliegende Kerben eingelegt wird.

Auf diesem Hintergrund hat sich die Erfindung die Aufgabe gestellt,
in der unmittelbaren Nähe einer an der Wand montierten Netzsteckdose eine Halterung für ein elektrisches Kleingerät zu schaffen, die Kleingeräte mit ganz verschiedenen Formen und Größen mechanisch sicher fixiert, wobei ein in das Kleingerät einzusteckendes Kabel kaum mechanisch belastet wird, aber das Kleingerät dennoch schnell und ohne sehr genau auszuführende Bewegungen in die Halterung eingebracht werden kann.

Als Lösung dieser Aufgabe lehrt die Erfindung, dass der Tragrahmen lösbar mit dem Zwischenmodul verbunden ist und der Auflagebereich am Zwischenmodul wenigstens angenähert komplementär zu einem Teilbereich der Außenfläche des Kleingerätes geformt ist.

Das wesentliche Merkmal der Erfindung ist das Zwischenmodul. Es ist mit seinem Auflagebereich an das Kleingerät angepasst und kann deshalb schnell, einfach und sicher damit verbunden werden. Weil das Zwischenmodul von dem Tragrahmen abgenommen werden kann, kann es ergonomisch vorteilhaft in der Hand des Nutzers gehalten werden, wenn er das elektrische Kleingerät hinein steckt, hinein legt, hinein schiebt, einrastet, einhakt, anbindet oder in anderer Weise verbindet. Mit nur einem zweiten Handgriff kann dann die Einheit aus Kleingerät und Zwischenmodul mit dem Tragrahmen verbunden werden. Auch diese Verbindung kann durch Stecken, Schieben, Rasten, Haken oder eine andere Mechanik frei gestaltet werden, so dass sie aufgabengemäß sehr schnell und ohne exaktes Positionieren, aber dennoch sicher hergestellt werden kann.

Ein weiteres wichtiges Merkmal der Erfindung ist die zum Kleingerät komplementäre Formung des Auflagebereiches im Zwischenmodul. Dadurch wird eine innige Verbindung zwischen Gerät und Modul erreicht, die den Sitz des Gerätes stabilisiert. So wird zum Beispiel eine halbzylindrische oder bauchige Außenfläche des Kleingerätes in einer dazu komplementären Rinne oder Mulde aufgenommen. Eine Einschnürung oder profilierte Einkerbung im Gerät kann - je nach ihrer Größe im Verhältnis zur übrigen Außenfläche - so gut durch eine hügelartige Ausbauchung oder einen profilierten Kamm auf dem Zwischenmodul unterstützt werden, dass das Gerät ohne Bewegung in der Halterung verbleibt, auch wenn es durch einen Luftzug, eine stärkere Luftströmung, durch flatternde Kleidungsstücke, versehentliche Berührungen oder sogar gezielte Kräfte belastet wird, wie sie z.B. entstehen, wenn das Gerät innerhalb der Halterung benutzt wird.

Um das Einbringen des Kleingerätes zu beschleunigen und die erforderliche Zielgenauigkeit weiter zu vermindern, ist eine entsprechende Formung des Auflagebereiches im Zwischenmodul und der sich daran anschließenden Zone hilfreich. Ein Ausführungsbeispiel dafür ist ein sich stetig erweiternder Trichter, der sich an den komplementär zum Kleingerät geformten Auflagebereich anschließt. Die Flächen des Trichterbereiches werden nur beim Einbringen eventuell berührt und stehen im fixierten Zustand des Kleingerätes davon ab. Dieser Effekt wird auch dann erreicht, wenn die Geometrie des Auflagebereiches selbst trichterförmig ist. In diesen Fällen ist es alternativ sinnvoll, das Zwischenmodul bereits im ersten Schritt mit dem Tragrahmen zu verbinden und erst dann das Kleingerät in das Zwischenmodul einzuführen.

Je näher der Schwerpunkt des Gerätes am Zwischenmodul positioniert wird und je näher der Schwerpunkt zu einer gedanklich lotrecht durch die Mitte des Auflagebereiches verlaufenden Linie angeordnet ist, desto stabiler ist das Gerät in der Halterung gesichert.

Wenn zum Beispiel Handys oder längliche Geräte, wie Rasierapparate, Zahnbürsten oder Akkuschrauber vom Zwischenmodul "hochkant" aufgenommen werden sollen, wenn also der Schwerpunkt des Kleingerätes relativ weit vom Auflagebereich entfernt ist, dann sollte der Auflagebereich mit einer rutschhemmenden Beschichtung oder einer rutschhemmenden Matte versehen werden. Dadurch wird das Risiko des "Herauskippens" eines turmartig aus der Halterung heraus aufragenden Gerätes vermindert. Wenn jedoch der Schwerpunkt des Kleingerätes allzu weit von der lotrecht zum Aufnahmebereich verlaufenden, gedanklichen Linie entfernt ist, kippt das Gerät dennoch aus dem Zwischenmodul heraus.

Wenn ein plattenförmiges Handy mit einer schmalen abgerundeten Kante in einen rinnenförmigen Auflagebereich eingesetzt wird, dann "kippt" es schon bei geringen Störkräften oder leichter Schräglage des Zwischenmoduls. Für diese Konfiguration schlägt die Erfindung vor, wenigstens eine der beiden langen Kanten oder wenigstens eine der beiden noch "freien" Ecken des Handys durch eine zusätzliche mechanische Kippsicherung zu halten. Sie ist im einfachsten Fall an das Zwischenmodul angeformt oder aufgesetzt und ragt wie ein Mast oder wie ein Pfeiler auf, um das Kleingerät abzustützen. In einer aufwendigeren Ausführung bildet die Kippsicherung eine U-förmige Tasche. Die Schenkel des U halten z.B. mit rinnenförmigen Vertiefungen das Handy an seinen beiden Längskanten.

Als eine besonders sichere Variante ist im Zwischenmodul eine Wanne ausgebildet, in welche das Kleingerät eingelegt wird. Auf diese Wanne wird vorne eine Kippsicherung aufgesetzt, die wie ein Bilderrahmen auf mehreren Randbereichen des Kleingerätes aufliegt.

Dank der turmartigen, "hochkant" stehenden Anordnung ragt das Kleingerät nicht störend in den Raum hinein, sondern schmiegt sich möglichst flach an die Wand neben der Steckdose. Ein Smartphone, ein mobiles Navigationsgerät oder ein kleiner Bildschirm können in dieser Position nicht nur aufgeladen, sondern auch benutzt werden.

Ein elektrischer Rasierapparat wartet in senkrechter Position griffbereit in einer dazu komplementären Mulde eines Zwischenmoduls mit eingebautem Gegenstecker und Kontakt zu einem Ladegerät. Zur senkrechten Aufnahme einer elektrischen Zahnbürste kann in das Zwischenmodul ein induktiver Übertrager eingebaut werden, der wie ein Dorn in den entsprechenden Hohlraum im Griff der Zahnbürste hineinragt und über elektromagnetische Wellen Energie an die Batterie in der Zahnbürste weitergibt. Rasierapparat und Zahnbürste beanspruchen dann keine Abstellflächen im Bad, sondern stehen griffbereit in der Nähe einer Wandsteckdose zur schnellen Verfügung.

In einer weiteren, sinnvollen Ausführungsvariante wird das Kleingerät im Unterschied zu den zuvor genannten Beispielen "fest" mit dem Zwischenmodul verbunden, zum Beispiel durch Schrauben, Kleben, Umbiegen von Blechlaschen oder Blechkanten, Einpressen oder eine andere Verbindung. Auch bei diesen Ausführungsvarianten ist in das Zwischenmodul ein "Auflagebereich" eingeformt oder eingebaut. Ein Beispiel ist ein Display ohne Gehäuse, das am Rand mit flachen Flanschen und Bohrungen darin versehen ist. Diese Flansche werden auf komplementär geformte "Auflagebereiche" im Zwischenmodul aufgelegt. In diese Bereiche sind Gewindesacklöcher eingeformt, in die Schrauben eingedreht werden, die durch die Bohrungen im Flansch hindurch ragen und mit ihrem Schraubenkopf das Display auf die Auflagebereiche aufdrücken.

Eine mögliche Variante der vorgenannten Zwischenmodule bietet Auflagebereiche für zwei oder mehr Kleingeräte. Zum Beispiel kann ein Zwischenmodul zwei Smart-Phones nebeneinander aufnehmen. Wenn die Kleingeräte vergleichsweise besonders klein sind, wie zum Beispiel Sensoren oder Signalleuchten, ist es sinnvoll, sie in einem einzigen Zwischenmodul gesammelt unterzubringen. Die Kombination einer Vielfalt von unterschiedlichen Kleingeräten ist besonders dann einfach, wenn sie quaderförmig sind und in komplementäre Fächer im Zwischenmodul platziert werden können. Mit einem derartigen Baukastensystem können Zwischenmodule konzipiert werden, deren Außenfläche glatt und daher robust, wartungsarm und elegant ist.

Als eine weitere Variante kann das Zwischenmodul auf seiner sichtbaren Außenfläche oder auf einer dafür vergrößerten Außenfläche oder mittels einer zusätzlichen Blende mit beliebigen Grafiken und/oder dreidimensional modellierten Dekorationen ausgestattet werden.

Als ein wesentliches Merkmal der Erfindung sind alle Varianten der Zwischenmodule lösbar mit dem Tragrahmen verbindbar, der an einer Wand angeordnet ist und dort zumindest teilweise wenigstens eine Netzsteckdose umgreift. Anstelle der Netzsteckdose kann der Tragrahmen auch einen Schalter und/oder eine andere, fest montierte Elektrobaugruppe umfassen. Der Tragrahmen kann an die Wand angeschraubt, angenagelt oder angeklebt werden. Oder er wird eingerastet, eingehakt, angedübelt oder angebunden, wozu es entsprechender Gegenstücke in der Wand bedarf.

Eleganter, kostengünstiger und schneller ist die Montage, wenn dazu keinerlei Veränderungen an der Wand wie Bohrlöcher oder Klebeflächen erforderlich sind, sondern die vom Tragrahmen umgriffene Netzsteckdose zusätzlich auch den Tragrahmen mechanisch fixiert. In einer sehr verbreiteten Bauart wird die Netzsteckdose in den hohlzylindrischen Innenraum einer so genannten Unterputzdose hinein geschoben und darin mit zwei Spreizkrallen gegen ein Herausrutschen abgesichert. Den inneren Bereich der Netzsteckdose mit den Kontakten umgibt an der nach außen weisenden Stirnseite ein Flansch oder Kragen, der zumeist aus einem Blechring besteht. Dieser blecherne Kragen liegt auf der Stirnkante der Unterputzdose sowie auf der daran angrenzenden Wand auf und wird über den Körper der Netzsteckdose und die beiden Spreizkrallen fixiert.

Die Erfindung schlägt vor, zwischen dem Kragen und der Wand eine Montageplatte einzulegen, die über die Netzsteckdose von deren Spreizkrallen mit gehalten wird. Die Montageplatte ist innen am Tragrahmen befestigt oder angeformt. Dadurch drückt der Kragen der Netzsteckdose die Montageplatte und damit auch den Tragrahmen an die Wand.

Vorzugsweise umschließt die Montageplatte den Körper der Netzsteckdose und/oder berührt ihn an drei voneinander möglichst weit entfernten Punkten. Wenn auf den Tragrahmen und damit auf die Montageplatte Kräfte auftreffen, die parallel zur Wand gerichtet sind, werden diese Kräfte auf den Flansch oder Kragen übertragen und weiter über den Netzsteckdosenkörper auf die Spreizkrallen, welch letztere sich tief im Inneren der Unterputzdose in relativ großem Abstand von der Wandoberfläche zumeist mit einer kegelförmigen Spitze in die Unterputzdose pressen und "festkrallen".

Obwohl der Tragrahmen nicht mit der Wand verbunden ist, können ihn die wandparallelen Kräfte NICHT gegenüber der Wand verschieben, weil die Spitze an einer Spreizkralle sich im Berührungspunkt wie ein Schwenkgelenk verhält, um das sich der Kragen entlang eines Kreisbogens verschwenken müsste und dadurch in die Stirnseite der Unterputzdose sowie in die Wand "eintauchen" müsste, was natürlich nicht möglich ist. Der Kragen selbst kann sich kaum verformen, weil er an mehreren Punkten stabil mit dem Steckdosenkörper verbunden ist. Deshalb ist die Montageplatte an der Innenkante des Tragrahmens eine belastbare, kostengünstige, schnell und schadenfrei montierbare Befestigungsvorrichtung für eine erfindungsgemäße Halterung.

Für den Einsatz einer erfindungsgemäßen Halterung im Außeneinsatz ist eine spritzwassergeschützte oder sogar wasserdichte Ausführung von Zwischenmodulen und Tragrahmen sinnvoll. Einfache, zusätzliche Schutzmaßnahmen sind überkragende Schutzleisten, die ähnlich wie ein Schutzdach vor einer Haustür gegen Regen schützen. Damit können Schutzarten bis zu IP 32 erreicht werden. Für höhere Schutzarten wie IP 54 und höher müssen zusätzliche Dichtringe und/oder Flachdichtungen eingebaut werden. In derartig geschützte Zwischenmodule können zum Beispiel Wettersensoren oder Outdoor Wlan-Repeater für den Garten oder die Terrasse eingesetzt oder eingebaut werden. Eine andere Anwendung ist der Außenteil einer Türsprechanlage mit z.B. Klingeltaster und/oder Kamera und/oder Lautsprecher.

Ein wesentliches Merkmal der Erfindung ist das Zwischenmodul, das elektrische Kleingeräte mechanisch fixiert und gegen Abkippen sichert, vorzugsweise in einer "Hochkant-Stellung". Dazu muss natürlich auch das Zwischenmodul selbst ebenso solide, aber lösbar am Tragrahmen befestigt werden. Das kann u.a. durch Stecken, Schieben, Rasten, Haken, mit einem Magneten oder mit einem Klettverbinder gemacht werden, sofern diese Verbindungen ausreichend dimensioniert sind.

Die Erfindung schlägt im Interesse einer hohen Kippsicherheit zwei Arme vor, die an das Zwischenmodul angeformt oder daran befestigt werden und deren Hebelwirkung ein Verschwenken gegenüber dem Tragrahmen, also auch ein Abkippen unterbinden. Diese Arme sind vorzugsweise parallel zu zwei gegenüberliegenden Bereichen des Tragrahmens ausgerichtet, um darauf aufgelegt oder aufgesteckt zu werden.

Als eine mögliche und interessante Variante sind in den Tragrahmen wenigstens zwei Sacklöcher eingelassen, in die je ein komplementärer Dorn vom Zwischenmodul her eingreift. Wenn an jedem Arm des Zwischenmoduls wenigstens ein solcher Dorn angeordnet ist, dann sichert er das Zwischenmodul gegen Bewegungen parallel zur Wand, sobald die Arme auf den Tragrahmen gedrückt werden. Dazu können Bügel angeformt oder angesetzt werden, die ihrerseits z.B. durch Rastnasen, Schrauben, Sicherungsstifte oder federnde Sperrklinken gesichert sind.

In einer anderen Ausführungsform sind an die Enden der Arme je eine Halbkugel, ein Dorn oder Stift oder ein anderes Formstück angeformt oder angesetzt. Diese beiden Formstücke greifen in je eine komplementäre Kerbe oder andere Vertiefung an der Seite des Tragrahmens ein. Dazu muss natürlich der Abstand der Formstücke dem Abstand der Vertiefungen entsprechen. Zur Stabilität der Verbindung von Zwischenmodul und Tragrahmen ist noch eine dritte Verbindung erforderlich. Das kann z.B. ein weiteres Formstück sein, das an wenigstens einem Arm, jedoch in geringem Abstand zum Zwischenmodul angeordnet ist.

In einer interessanten Variante sind die Vertiefungen im Tragrahmen als eine vertikale Nut an den Außenkanten des Tragrahmens ausgebildet, in der das oder die Formstücke entlang gleiten. Wenn das Formstück senkrecht zu der Nut gesehen einen rotationssymmetrischen Querschnitt hat, kann beim Einführen der Formstücke in die Nuten am Tragrahmen das Zwischenmodul in einer beliebigen Winkelstellung gehalten werden. Das Einsetzen kann zusätzlich vereinfacht werden, indem das offene Ende der Nut trichterförmig erweitert ist und/oder die Nut in einer Krümmung oder Kurve verläuft, sodass der Anfangsbereich der Nut nicht parallel, sondern schräg oder sogar senkrecht zur Wand ausgerichtet ist und der Öffnungsquerschnitt der Nut auf den Nutzer zu weist.

Bereits als eine andere oder zusätzliche Ausführungsvariante vorgenannt ist ein Bügel, der als ein Fixierelement die Arme des Zwischenmoduls an den Tragrahmen andrückt. Dafür wird ein C-förmiges Profil vorgeschlagen, das mit seinen Endbereichen oder mit angesetzten oder angeformten Gleitstücken in zwei dazu komplementäre Nuten an gegenüberliegenden Seitenwänden des Tragrahmens eingeschoben werden kann. Das Profil gleitet hinweg über die beiden Arme des Zwischenmoduls, die auf dem Tragrahmen aufliegen. Wenn das C-Profil mit seiner nach innen weisenden Fläche die Arme flächig berührt, kann das Fixierelement darüber geschoben werden, berührt und fixiert sie dadurch in dieser Position.

In einer interessanten Variante kann dieses Fixierelement zu einem Rahmen vergrößert werden. Vorzugsweise gleicht die Form dieses aufgeschobenen Rahmens dem Tragrahmen, weil dadurch beide Rahmen vollflächig auf den Armen des Zwischenmoduls aufliegen und bei einem möglichen Verkippen die dabei anfallenden Kräfte großflächig auf beide Rahmen verteilt werden, so dass sie materialsparend und optisch vorteilhaft schlank dimensioniert werden können.

Ein rahmenförmiges Fixierelement wird vorzugsweise so geformt, dass es die Flächen neben dem nach außen hin sichtbaren, so genannten "Topf" der umfassten Netzsteckdose sowie ggf. umfasster Netzschalter oder anderer Einbauten abdeckt und dadurch nach außen hin mechanisch und elektrisch isoliert. Die dafür erforderlichen Öffnungen werden idealer Weise an den äußeren Umriss von Schaltern und Steckdosentöpfen so genau angepasst, dass nur eine schmale umlaufende Fuge offen bleibt.

Für Nachrüstungen von bereits verbauten Steckdosen und Schaltern wird vorgeschlagen, dass die Öffnungen im rahmenförmigen Fixierelement sehr klein sind. Auf der wandseitigen Fläche des Fixierelementes sind Linien oder Sollbruchlinien aufgebracht oder eingeformt, entlang derer eingesägt, eingeschnitten oder gebrochen werden kann, um die Größe der Öffnung an die umfassten Schalter oder Steckdosen anzupassen.

Bei einer weiteren Variante des Zwischenmoduls ist der Auflagebereich, wie schon erwähnt, zu einer Wanne erweitert, in die das Kleingerät hinein gelegt werden kann. Durch die besonders großflächige Auflage wird das Kleingerät sehr sicher gehalten, sogar dann, wenn es weiter benutzt wird. Gegen ein Herausfallen aus der Wanne wird das Kleingerät durch einen Abdeckrahmen, einen Haltebügel, einen Gurt oder ein anderes Halteelement gesichert. Je nach Größe und Form dieses Halteelementes kann in eine relativ große Wanne ein sehr kleines Gerät eingelegt und gesichert werden. Zu beachten ist dann, dass bei sehr großen Geräten ein größerer Teil der Vorderfront durch das Halteelement abgedeckt wird.

Auf aktuellem Stand der Technik sind nicht nur Funktelefone, sondern z.B. auch Fernbedienungen, Navigationsgeräte und Displays als eine rechteckige Platte geformt. Dabei gibt es sehr viele verschiedene Größen und auch sehr viele verschiedene Verhältnisse zwischen Länge und Breite, aber stets eine rechteckige Form. In einer weiteren Ausführungsvariante soll ein Zwischenmodul so ausgestaltet werden, dass es rechteckige, plattenförmige Elektronikgeräte in verschiedenen Größen aufnimmt. Dazu dient ein Auflagebereich, der zu einer Unterkante, einer daran anschließenden Ecke und einer Seitenkante des Elektronikgerätes etwa komplementär geformt ist. In der Praxis wird der Auflagebereich häufig die Form einer Rinne haben, die sich an einem Ende an eine dazu senkrecht stehende zweite, sehr kurze Rinne anschließt.

Weil eine Platte in einer solchen L-förmigen Rinne ins Kippen kommen kann, wird sie durch einen Sicherungsarm gehalten, der mit seinem ersten Ende in der Nähe des Auflagebereiches, hier also der Rinne, schwenkbar befestigt ist. Der Sicherungsarm trägt an seinem zweiten Ende eine Kralle, die eine der beiden oberen, noch freien Ecken des plattenförmigen Elektronikgerätes umfasst. Vorzugsweise ist es die Ecke, die diagonal derjenigen unteren Ecke des Kleingerätes gegenüber liegt, welche sich in den Winkel zwischen den beiden Rinnen des Auflagebereichs einschmiegt.

Da alle rechteckigen Elektronikgeräte in ihrer Größe voneinander abweichen, wird der Sicherungsarm daran angepasst, indem er in seiner Länge verstellbar ist. Vorzugsweise wird die Längenverstellung so konstruiert, dass sie nach der Justage auch einen gewissen Druck auf die Kralle ausübt, so dass das elektronische Kleingerät gut im Zwischenmodul gesichert ist. Dank der schwenkbaren Befestigung nahe dem Auflagebereich passt sich der Sicherungsarm an unterschiedliche Verhältnisse zwischen Länge und Breite des Elektronikgerätes an. Wenn der Schwenkbereich sehr groß ist, sollte auch die Kralle gegenüber dem Sicherungsarm verschwenkbar sein. Bei extremen Schwenkwinkeln kann die Stabilität dadurch gefördert werden, dass zwei Schwenkarme parallel angeordnet werden. Ähnlich wie z.B. bei Scheibenwischern für Lastkraftwagen hält dieses Parallelogramm die Kralle unabhängig vom jeweiligen Schwenkwinkel stets in der gleichen Winkelstellung.

Die zuvor beschriebenen Tragrahmen und die darin eingesetzten Zwischenmodule werden in der Praxis in den meisten Fällen aus Kunststoff bestehen, zum Beispiel als Spritzgussteil oder auch als "gedrucktes" Teil, das aus miteinander verschmolzenen, sehr kleinen Kunststoffpartikeln aufgebaut ist

Alternativ können jedoch sowohl der Tragrahmen als auch die Zwischenmodule aus Metall gefertigt werden, insbesondere für Anwendungen in Bahnhöfen, Schulen, Hotels, Krankenhäusern und anderen öffentlichen oder halböffentlichen Gebäuden, um vandalistische oder ungewollte Beschädigungen der erfinderischen Halterung zu erschweren oder möglichst ganz zu unterdrücken. Für diese Anwendungsfälle ist ein Aufbau aus Metallgussteilen oder gebogenem oder gepresstem Stahlblech sinnvoll, natürlich mit der entsprechenden Spannungsisolation.

Von den genannten, rechteckigen Elektronikgeräten weisen viele in der Mitte ihrer schmalen Kante eine kleine Steckdose auf, an die ein Ladekabel angeschlossen werden kann, um die eingebauten Batterien wieder aufzuladen. Diese Steckdose wird verdeckt, wenn das Gerät in den Auflagebereich eingesetzt wird. Um dennoch einen Zugang zur Steckdose zu haben, wird bei der Konstruktion des Zwischenmoduls der Auflagebereich soweit gegenüber der Verbindung zum Tragrahmen seitlich verschoben, dass ein Elektrokabel durch einen Durchlass im Auflagebereich hindurch seitlich neben den Tragrahmen geführt werden kann. Dieses Kabel kann dann mit seinem Stecker in die Steckdose am Elektronikgerät eingesteckt werden, um einen Ladestrom zu liefern und/oder Signale zu übertragen.

In einer sehr einfachen Ausführung wird das Ladekabel benutzt, das mit dem Elektronikgerät zusammen ausgeliefert worden ist. Im Normalfall weist es an seinem gerätefernen Ende ein sog. Stecker-Netzgerät auf, das in eine Netzsteckdose eingesetzt wird.

Bei Benutzung zusammen mit einer erfindungsgemäßen Halterung ist dieses Ladekabel jedoch viel zu lang und hängt in einer Schlaufe herunter. Diese Schlaufe kann sich z.B. ungewollt in der Kleidung eines Nutzers verfangen und mitgerissen werden. Dadurch wird im einfachsten Fall nur ein Stecker herausgezogen, aber bei einer quer zum Zwischenmodul wirkenden Zugkraft womöglich die empfindliche kleine Steckdose im Elektronik-Gerät beschädigt, die meist nicht repariert werden kann, so dass das Gerät nicht nur ausfällt, sondern auch noch zu entsorgen ist.

Um das zu vermeiden, präsentiert die Erfindung ein zweites Zwischenmodul, dass ebenfalls am Tragrahmen befestigt ist, vorzugsweise an dessen Unterkante. Dahinein kann das von dem ersten Zwischenmodul her kommende Kabel eingeführt, im Inneren teilweise eingelegt oder aufgewickelt und wieder hinausgeführt werden oder mit einem Elektronikbaustein innerhalb des zweiten Zwischenmoduls, wie z.B. einem Netzgerät verbunden werden. Dadurch wird die optisch unschöne und funktionell hinderliche Kabelschlaufe vermieden.

Die Funktion des zum Kleingerät zugehörigen Ladekabels kann alternativ in das Zwischenmodul integriert werden. Dazu wird in den Auflagebereich des Zwischenmoduls ein Stecker oder eine Steckdose an der zum elektronischen Kleingerät passenden Stelle fest eingebaut, in die ein dazu passendes Gegenstück des Kleingerätes einsteckbar ist. Die Steckdose oder der Stecker im Zwischenmodul ist mit einem weiterführenden Elektrokabel verbunden, das entweder zu einem im Zwischenmodul eingebauten oder zu einem anderswo ein- oder aufgebauten Ladegerät führt. Anstelle des Ladegerätes kann ein anderer Elektronikbaustein wie z.B. ein Repeater, ein Lautsprecher oder ein Projektor angeschlossen werden.

Wenn im Zwischenmodul ein Ladegerät eingebaut ist oder vom Zwischenmodul aus ein Ladegerät im Tragrahmen benutzt werden soll, so muss dazu eine elektrische Verbindung hergestellt werden. Es ist prinzipiell nicht ausgeschlossen, aber zeitraubend und fehlerträchtig, dazu eine extern verlaufende Kabelverbindung herzustellen. Viel eleganter und zuverlässiger ist es, am Zwischenmodul elektrische Kontakte anzuordnen, die beim mechanischen Verbinden des Zwischenmoduls mit dem Tragrahmen selbsttätig und elektrisch leitend mit komplementären Gegenkontakten verbunden werden, die in den Tragrahmen eingebaut sind.

Für einige elektrische Kleingeräte sind seit längerem standardisierte, wiederaufladbare Batterien vorgesehen, die zum Aufladen herausgenommen werden müssen. Das bekannteste Beispiel sind zylindrische Akkumulatoren, deren elektrische Pole an den beiden kreisförmigen Stirnseiten angeordnet sind, und deren Abmessungen unter den Bezeichnungen A, AA und AAA, oder IEC-Baugrößen R23, R6 und R03 genormt sind.

Die Erfindung schlägt vor, ein Zwischenmodul zum Aufladen solcher Batterien aufzurüsten. Der Auflagebereich ist ein Hohlzylindersegment zur Aufnahme eines einzigen Akkumulators oder eine Wanne zum gleichzeitigen Laden von mehreren Akkus. An zwei gegenüberstehende Seitenwände dieses Auflagebereiches werden Kontaktplatten oder Kontaktfedern angebaut, die zu den Kontakten der Batterien komplementär geformt sind. Im Zwischenmodul oder im Tragrahmen ist ein Netzladegerät eingebaut, das mit den Kontaktplatten oder Kontaktfedern elektrisch leitend verbunden ist.

Anstelle des Netzgerätes oder zusätzlich können zum Aufladen der Akkus auch Solarzellen in den Tragrahmen oder in das Zwischenmodul eingesetzt werden. Solche Solarzellen können beim Abschalten des Netzes oder bei Stromausfall zum Beispiel auch Sensoren, Fluchtwegweiser oder Panik-Beleuchtungen versorgen.

In einer weiter verfeinerten Ausführung sind die Kontaktplatten oder Kontaktfedern in verschiedene Positionen verschwenkbar oder verschiebbar, sodass sie an die Abmessungen verschiedener genormter Batterien angepasst werden können. Dann ist ein einziges Zwischenmodul für mehrere verschiedene Batterieabmessungen einstellbar.

Es ist das wesentliche Merkmal der Erfindung, dass für einen Tragrahmen verschiedene Zwischenmodule gefertigt werden können, und dadurch ganz verschiedenartige Kleingeräte wie ein Smart-Phone, ein Akkuschrauber, eine Zahnbürste oder ein Lautsprecher an ein- und demselben Tragrahmen befestigt werden können. Als beispielhafte Gerätegruppen werden hier Kommunikationsgeräte, Bild-Aufnahme oder -Wiedergabegeräte, Hygiene- oder Körperpflegegeräte, Unterhaltungsgeräte, Beleuchtungseinrichtungen, Haushaltsgeräte, Klimaerfassungsgeräte, Klimageräte, Kameras, Nothilfsgeräte, Bedienungsgeräte, Displays, Sensoren, Projektoren, Personenerfassungsgeräte, Navigationssysteme in Gebäuden, Ablaufsteuerungen, Stechuhren, Dekorationselemente, Generatoren, Signalübertrager, Funksperren für autonome Fahrzeuge und Störsender genannt.

Aus der Gruppe der Unterhaltungsgeräte sind Radioempfänger, Fernsehgeräte, CD-Spieler, MP3-Player, Spielekonsolen und Lautsprecher weithin bekannt und benutzt. Bisher noch nicht so bekannt sind Übertrager für die Audiosignale aus Stereoanlagen oder Fernsehempfängern. Das Audiosignal wird per Kabel bis zu den Steckbuchsen eines geeigneten Übertragers geführt, der an einer nahe liegenden Steckdose mittels eines erfindungsgemäßen Tragrahmens und eines Zwischenmoduls angeordnet ist. Der Übertrager wird im Zwischenmodul über ein Netzgerät mit der zusätzlichen Hilfsspannung für den Betrieb seiner Elektronik versorgt.

Das Ausgangssignal des Übertragers kann ein Funksignal sein, das durch einen geeigneten Empfänger im Lautsprecher decodiert wird. Alternativ wird das Ausgangssignal in einem ersten Übertrager auf die Netzspannung aufmoduliert, über das Netzkabel verbreitet und in der Nähe des empfangenden Lautsprechers durch einen zweiten Übertrager wieder demoduliert und als Tonsignal einem Verstärker im Zwischenmodul oder im Lautsprecher zugeführt.

Zur genauen Bestimmung der Position von Menschen und Robotern in Räumen dienen drei Zwischenmodule mit jeweils einem Sender. Diese insgesamt drei Signale werden ähnlich wie beim GPS-System von einem Empfänger irgendwo im Raum empfangen, der aus diesen Signalen seine genaue Position errechnet. Der Empfänger kann ein Smartphone sein, das Personen mit sich führen. Damit kann ein Navigationssystem in großen Gebäuden gesteuert werden. Wartungspersonal oder Blinde können zu einer bestimmten Position innerhalb eines Raumes geführt werden. Oder der Empfänger ist Teil eines Roboters, der mit dieser Information sein Ziel sucht und findet.

Ein weiteres Beispiel für ein Kleingerät im Zwischenmodul ist ein elektrischer Generator, der zum Beispiel beim Ausfall oder beim Abschalten der Netzspannung oder anderer Energiespeicher durch manuellen Druck vom Nutzer auf einen Hebel oder eine Kurbel elektrische Energie erzeugt, die zum Beispiel für das Aussenden eines Funksignals oder für das Aufladen einer Batterie verwendet wird.

Ein Kleingerät im Zwischenmodul kann ein Biometrisches Modul zur Erfassung eines Fingerabdruckes oder zum Scannen der Retina im Auge von Personen oder Tieren sein. Damit kann zum Beispiel deren Zugangsberechtigung erfasst werden.

Ein weiteres Beispiel für ein Kleingerät ist ein sog. Powerline-Modul oder Kabelfernseh-Modul zum Aufmodulieren oder Auskoppeln von Informationssignalen auf die Netzspannung. Damit werden Signale, wie zum Beispiel eine Internetankopplung eines PCs übertragen. Oder die Signale aus einer Satellitenschüssel oder einem unterirdischen Kabel werden auf dem Dach oder im Keller eines Hauses in ein erstes Fernseh-Modul einmoduliert, über die Netzleitung innerhalb des Hauses übertragen, in der Nähe eines Fernsehgerätes über ein zweites Fernseh-Modul wieder ausgekoppelt, und über ein Koaxialkabel zum Receiver übertragen.

Eine hilfreiche Ausführung eines Zwischenmoduls beim Einsatz von autonomen Fahrzeugen wie zum Beispiel Saugrobotern in Wohnungen und Büroräumen oder Flurförderfahrzeugen in Lagerhallen oder Fertigungsstätten ist eine nichtmechanische und drahtlose Sperre für Bereiche, die keinesfalls befahren werden sollen. Dazu sendet das Zwischenmodul Infrarot- oder Funksignale aus, die ein entsprechender Empfänger in einem autonomen Fahrzeug, das in den Bereich dieser Signale gerät, als den absoluten Befehl zum sofortigen Umkehren interpretiert.

In Schulen oder Kinos kann als Gerät im Zwischenmodul ein Störsender sinnvoll sein, der das Empfangen von Funksignalen durch Smart-Phones oder Mobiltelefone unmöglich macht. In hochrangigen Besprechungsräumen oder militärischen Einrichtungen kann ein derartiger Störsender das unerwünschte Mithören durch Spione erschweren oder zumindest behindern.

Auch für nahezu alle anderen, derzeit bekannten und künftig bekannt werdenden elektronischen und elektrischen Geräte kann ein Zwischenmodul konstruiert und gefertigt werden. Die einzige praktische Einschränkung ist die absolute Größe und/oder das absolute Gewicht des Elektrogerätes im Verhältnis zu den vom Tragrahmen umgriffenen Netzsteckdosen, Netzschaltern und anderen fest montierten Elektrobaugruppen.

Die erfinderische Halterung wird in der Praxis vor allem in ortsfesten Gebäuden eingesetzt werden. Da jedoch vermehrt auch Eisenbahnzüge und Omnibusse mit Netzsteckdosen ausgestattet werden, weil elektrische und elektronische Kleingeräte während der Fahrt benutzt werden, ist es sinnvoll, an diese Netzsteckdosen ebenfalls erfinderische Tragrahmen und Zwischenmodule für die Aufnahme von Kleingeräten einzusetzen. Zumeist können dafür die Teile verwendet werden, die auch für die Steckdosen gemäß der in Europa sehr verbreiten Bauform CEE 7/3, "Stecker-Typ F" benutzt werden. Diese Bauform mit ihrem tiefen Steckdosentopf und dem einstmals namensgebenden Schutzkontakt (Schuko) wird auch in Züge immer öfter eingebaut.

In PKW, LKW und Wohnmobilen wird oftmals auch ein Niederspannungsnetz mit 12V oder 48 V Nennspannung eingebaut. Dessen Steckdosen gemäß der Norm SAE J563 weisen einen sehr tiefen, rein zylindrischen Topf von etwa 21 mm Durchmesser auf. Es ist sinnvoll, auch um solche Steckdosen herum einen erfinderischen Tragrahmen anzuordnen, auf dem erfinderische Zwischenmodule befestigt werden können. Wenn dieses Zwischenmodul zum Beispiel ein Smartphone trägt, wird damit die gesetzliche Vorgabe erfüllt, dass ein Autofahrer während der Fahrt nie sein Smartphone in der Hand halten darf. Auch wenn er es zum Beispiel "nur" als Navigationsgerät verwendet.

Im Folgenden sollen weitere Einzelheiten und Merkmale der Erfindung anhand von zwei Beispielen näher erläutert werden. Diese Beispiele sollen die Erfindung jedoch nicht einschränken, sondern nur erläutern. Es zeigt in schematischer Darstellung:

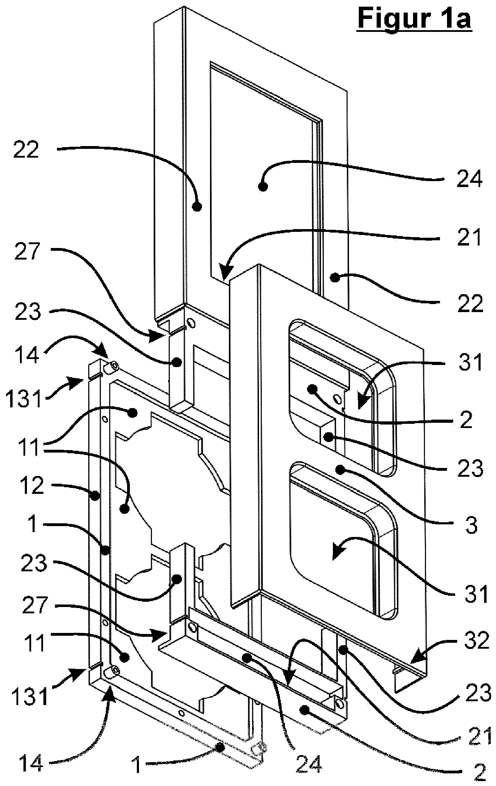

- Figur 1a:: Einzelteile einer erfindungsgemäßen Halterung
- Figur 1 b:: Teile wie vor, jedoch zusammengesteckt
- Figur 1c:: Wie vor, jedoch montiert an Schalter und Netzsteckdose und bestückt mit Kleingerät.
- Figur 2:: Zwischenmodul wie vor, in Einzelteile zerlegt
- Figur 3a:: Halterung für Nachrüstung, mit Haltezapfen
- Figur 3b:: wie vor, jedoch mit Halteriegel und Verschluss

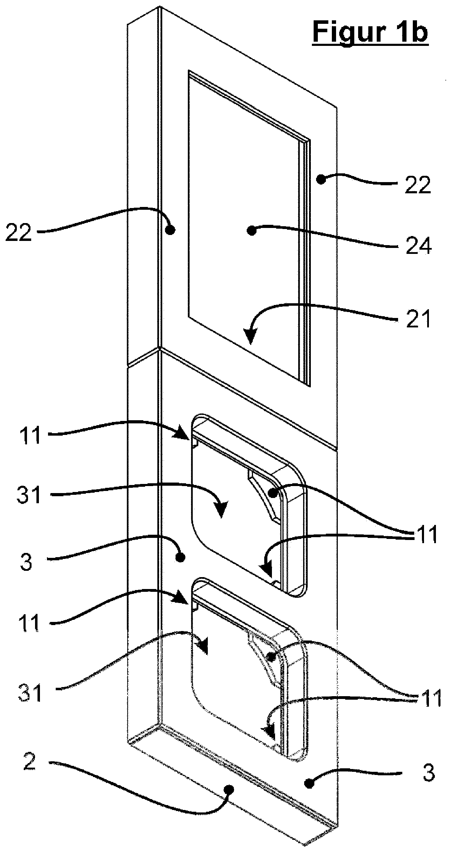

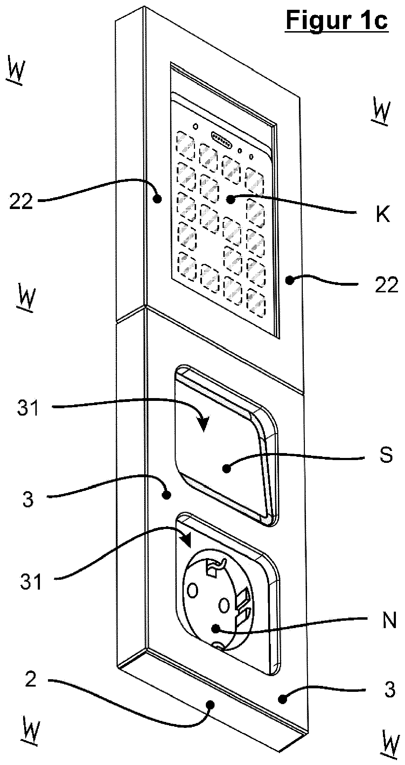

In **Figur 1a** sind die Einzelteile für eine erfindungsgemäße Halterung als Schrägbild gezeichnet, und zwar nach Art einer sog. Explosionszeichnung "kurz vor dem Aufeinanderstecken". Der Tragrahmen 1 in der untersten Zeichnungsebene der Figur 1 besteht aus einem rechteckig umlaufenden Vierkantprofil, an das im Inneren des Tragrahmens 1 eine Montageplatte 11 angeformt ist. Diese Montageplatte 11 ist von zwei Öffnungen durchbrochen, die in der dargestellten Ausführung die Form eines Kreises mit vier rechteckigen Ausbuchtungen haben. Die Form dieser Öffnungen ist an eine - hier nicht eingezeichnete - Netzsteckdose N derart angepasst, dass der Körper der Netzsteckdose N hindurch gesteckt werden kann und mit seinem - hier ebenfalls nicht eingezeichneten - Flansch oder Kragen auf der Montageplatte 11 aufliegt, so dass der Kragen die Montageplatte 11 mitsamt dem Tragrahmen 1 an eine - auch nicht eingezeichnete - Wand W drückt. Dann umschließt die Montageplatte 11 die Netzsteckdose N ringförmig.

In Figur 1a nicht eingezeichnet, jedoch aus der Zusammenstellung aller Einzelteile heraus leicht nachvollziehbar ist, dass in einer Variante der Tragrahmen 1 an der Oberkante, in seiner mittleren Brücke und an der Unterkante in eine linke und eine rechte Hälfte aufgeteilt werden kann. Dadurch müssen bei einer Nachrüstung von künftig tragenden Netzsteckdosen N und/oder Netzschaltern S diese nur in ihrer Befestigung gelockert und geringfügig nach vorne gezogen werden. Dann können die beiden Hälften des Tragrahmens 1 von links und von rechts unter die Kragen oder Flansche herunter geschoben werden und über ihre Steckverbindungen wieder miteinander zu einer einzigen Baugruppe verbunden werden. Der wesentliche Vorzug ist, dass die elektrischen Verbindungen der Netzsteckdosen N und Netzschalter S bei einer Nachrüstung nicht gelöst werden müssen, so dass eine Montage auch durch weniger qualifiziertes Personal möglich ist.

In der mittleren Zeichnungsebene der Figur 1a ist oben ein großes Zwischenmodul 2 dargestellt. Zur Aufnahme eines - hier nicht eingezeichneten - Kleingerätes K ist eine Wanne 24 angeformt, von der hier nur der mittlere Bereich mit seiner ebenen Grundfläche sichtbar ist, weil die Randstreifen durch eine umlaufende Kippsicherung 22 abgedeckt sind. Diese Kippsicherung 22 hält ein Kleingerät K in der Wanne 24 bei einem Luftzug, bei Erschütterungen sowie bei versehentlichen oder absichtlichen Berührungen davon ab, aus dem Auflagebereich 21 heraus nach vorne abzukippen. Die Kippsicherung 22 verdeckt mit ihrem unteren Bereich den für die Erfindung so charakteristischen Auflagebereich 21, der komplementär zu der Unterkante des einzulegenden Kleingerät K geformt ist.

In Figur 1a ist ein zweites, kleines Zwischenmodul 2 in der mittleren Zeichnungsebene im unteren Bereich dargestellt. Dessen Auflagebereich 21 ist ebenfalls nicht sichtbar, weil das kleine Zwischenmodul 2 stattdessen seine Unterseite zeigt. Das kleine Zwischenmodul 2 weist ebenfalls eine sehr kleine Wanne 24 auf, deren geringe Größe für die Aufnahme von zum Beispiel einem Temperaturfühler oder einem anderen Sensor geeignet ist.

In der obersten Zeichnungsebene von Figur 1a ist das Fixierelement 3 in seiner großen Fläche von zwei etwa quadratischen Öffnungen 31 mit abgerundeten Ecken durchbrochen. Es ist leicht nachvollziehbar, dass die Mittelachsen dieser Öffnungen 31 mit denjenigen der Öffnungen in der Montageplatte 11 des Tragrahmens 1 fluchten, in die bekanntlich eine Netzsteckdose N oder ein Netzschalter S eingeschoben wird. Dadurch sind die Stirnseiten der Netzsteckdosen N oder der Netzschalter S durch die Öffnungen 31 im Fixierelement 3 hindurch zugänglich und zu benutzen.

In Figur 1a sind an beide Zwischenmodule 2 jeweils zwei Arme 23 angeformt, die parallel zu dem Vierkantprofil des Tragrahmens 1 ausgerichtet sind. Sehr gut zu erkennen ist, dass die Arme 23 auf den Tragrahmen 1 abgesenkt werden können und dann flächig darauf aufliegen, so dass sie in der montierten Position mit ihrer gesamten, nach unten weisenden Fläche auf der Oberkante des Tragrahmens 1 aufliegen.

Auf die nach oben weisende Fläche der Arme 23 wird das Fixierelement 3 aufgelegt und eingesteckt. Es drückt dann auf die gesamte obere Fläche der beiden Arme 23. Dadurch verteilen sich die Gewichtskraft und eventuell auf die beiden Zwischenmodule 2 wirkende externe Kräfte und/oder Drehmomente gleichmäßig auf den Tragrahmen 1 und zwar direkt durch Aufliegen und indirekt über das aufdrückende Fixierelement 3.

Damit die Verbindung zwischen Fixierelement 3 und Tragrahmen 1 ausreichend fest ist, sind an die Innenseite des Fixierelementes 3 insgesamt vier Rippen 32 angeformt, die in dazu fast komplementär geformte horizontale Nuten 131 in den Seitenwänden des Tragrahmens 1 eingeschoben und /oder eingedrückt werden. Durch ein geringes Untermaß und/oder - in Figur 1a nicht erkennbare - trapezförmige Ausbildung der Rippen 32 und/oder der Nuten 131 verkeilen sich beide ineinander. Die Rippen 32 werden zusätzlich auch noch in Nuten an der Seite der Tragarme 23 eingedrückt.

In Figur 1a nicht dargestellt, aber gut nachvollziehbar ist eine andere Variante zur Sicherung des Fixierelements 3 auf dem Tragrahmen 1, die die Elastizität dieses U-förmigen Profils ausnutzt. Dazu werden an die Endbereiche der Schenkel des U-Profils nach innen weisende Leisten angeformt, die das Profil von einer U-Form zu einer C-Form erweitern. Diese zusätzlichen Leisten greifen in komplementäre wandseitige Absätze an den Seitenkanten 12 des Tragrahmens 1.

Eine weitere Sicherung für die Zwischenmodule 2 auf dem Tragrahmen 1 sind die vier Zapfen 14 an den Ecken des Tragrahmens 1.Davon sind in Figur 1 a drei sichtbar. Sie greifen in dazu komplementäre Bohrungen 27 in den Zwischenmodulen 2 ein. Auch die Belastbarkeit dieser Verbindung zwischen Tragrahmen und Zwischenmodul kann durch keilförmige Ausbildung und/oder ein geringes Untermaß verstärkt werden.

In **Figur 1b** sind die in Figur 1a dargestellten Einzelteile zusammengesteckt. Dadurch ist vom oberen, großen Zwischenmodul 2 nur noch die Innenseite der Wanne 24 als ebene Fläche sichtbar. Das um die Wanne 24 herum laufende Profil ist durch die Kippsicherung 22 verdeckt.

Ebenfalls verdeckt sind die Arme 23 beider Zwischenmodule 2, nämlich durch das rahmenförmige Fixierelement 3. Auch der Tragrahmen 1 wird davon verdeckt. Von ihm sind lediglich die etwa dreieckigen Bereiche der Montageplatte 11 durch die Öffnungen 31 hindurch sichtbar.

In Figur 1b ist vom unteren Zwischenmodul 2 nur die Unterseite sichtbar. Letztere fügt sich in dieser Ausführungsform glatt und harmonisch in das Fixierelement 3 ein. In optisch sehr gefälliger Weise wird deutlich, wie glatt und daher unempfindlich gegen Verschmutzungen und unnötige Verletzungen vermeidend die Kippsicherung 22 und das Fixierelement 3 geformt und gestaltet werden können.

In Figur 1b sind der Übersichtlichkeit halber weder eine Netzsteckdose N, ein Netzschalter S noch ein elektrisches Kleingeräte K eingezeichnet.

Die **Figur 1c** stellt dar, wie eine erfindungsgemäße Halterung aus den Einzelteilen gemäß den vorhergehenden Figuren 1a und 1b zu einer Einheit zusammengesteckt und an einer Wand W montiert wird. Im oberen Bereich deckt die rahmenförmige Kippsicherung 22 ein Smartphone als elektrisches Kleingerät K auf dessen Randstreifen ab. Vom Smartphone K ist nur dessen Display mit etlichen Buttons darauf sichtbar.

Das obere Zwischenmodul 2 und dessen Arme 23 sind nicht sichtbar, denn die letzteren sind vom Fixierelement 3 abgedeckt. In der oberen Öffnung 31 des Fixierelementes 3 ist ein Netzschalter S mit seiner schräg stehenden Betätigungswippe sichtbar. Zwischen der Betätigungswippe und der Öffnung 31 ist keine besonders große Fuge erkennbar. Die dargestellte Ausführungsform besteht also aus Teilen, die bereits bei ihrer Konstruktion aufeinander angepasst sind. In der Praxis wird deshalb ein Fixierelement 3, dass gemäß der Ausführungsvariante der Figur 1c geformt ist, nur für eine ganz bestimmte Baureihe von Netzschaltern S und/oder Netzsteckdosen N anwendbar sein, es sei denn, dass der Nutzer eine größere Fuge in Kauf nimmt. Das ist erfreulicherweise jedoch nur ein optischer, kein wesentlicher funktionaler oder sicherheitstechnischer Nachteil.

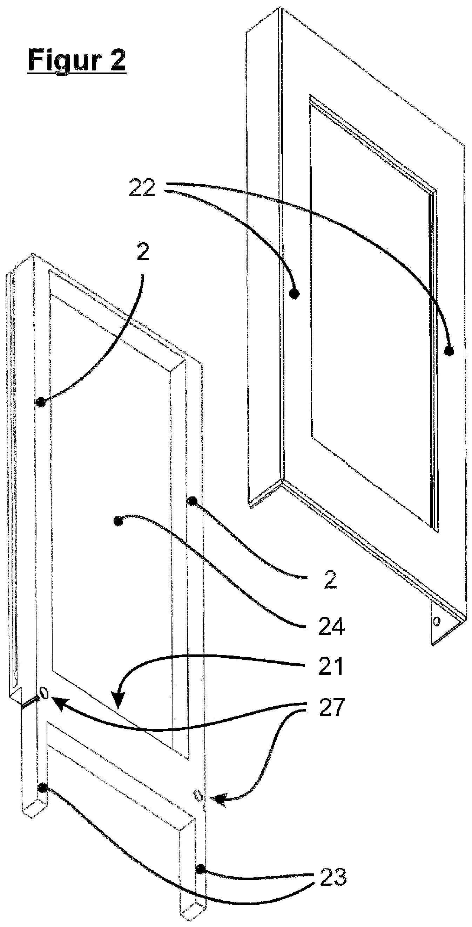

Die **Figur 2** präsentiert die beiden Einzelteile des in den Figuren 1a bis **1c** dargestellten, oberen Zwischenmoduls 2. Auf der linken Seite ist vom Zwischenmodul 2 das umlaufende Vierkantprofil zu erkennen. Es ist nicht zu verwechseln mit dem ähnlichen Vierkantprofil des Tragrahmens 1, weil die Wanne 24, die von diesem Vierkantprofil gebildet und gehalten wird, nicht von Öffnungen durchbrochen ist.

In seinem unteren Bereich ist das Zwischenmodul 2 von zwei Bohrungen 27 durchbrochen, die für die Sicherung der beiden Arme 23 am - in Figur 2 nicht dargestellten - Tragrahmen 1 dienen.

In Figur 2 verläuft in den Seiten des Vierkantprofils des Zwischenmoduls 2 je eine längliche, vertikale Nut, von denen nur die linke in Figur 2 sichtbar ist. In diese Nut greifen Noppen ein, die an der Innenseite der Kippsicherung 22 angeordnet sind. An der rechten unteren Ecke der Kippsicherung 22 ist eine solche Noppe klar zu erkennen. Nach dem Einlegen eines Kleingerätes K kann die Kippsicherung 22 von oben her auf das Zwischenmodul 2 und über das darin liegende Kleingerät K hinweg geschoben werden, so das die in Figur 1c eingezeichnete, obere Baugruppe entsteht.

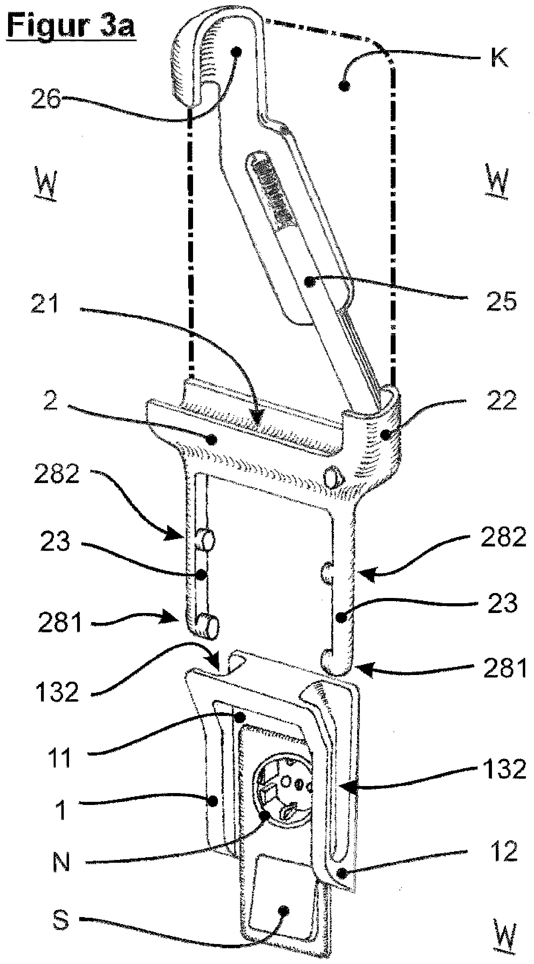

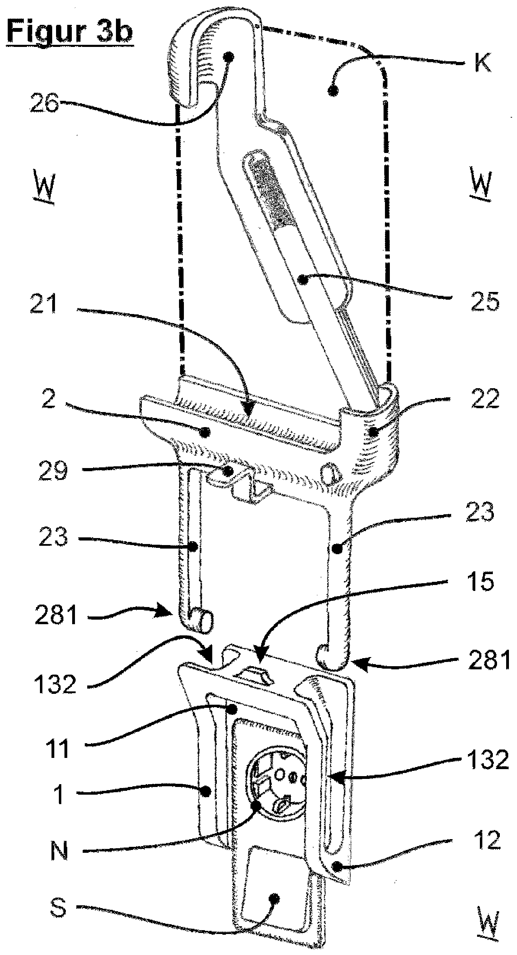

In den Figuren **3a** **und** **3b** ist eine ganz andere Ausführungsvariante einer erfindungsgemäßen Halterung für Kleingeräte dargestellt. Sie ist vorrangig für die Nachrüstung von bereits verbauten Netzsteckdosen N, Netzschaltern S und den daran angepassten Abdeckungen vorgesehen.

Deshalb sind bei dieser Ausführung des Tragrahmens 1 die randseitigen, verstärkenden Profile so weit auseinander gerückt, dass sie die vorhandenen Abdeckungen nicht ersetzen, sondern daneben auf der Wand W aufliegen. Zwischen diesen Randprofilen ist - wie bei den vorherigen Varianten - eine Montageplatte 11 angeformt. In den Figuren 3a und 3b sind die Öffnungen in dieser Montageplatte 11 nicht sichtbar, weil sie bereits wieder von der Deckplatte und der darin eingesetzten Netzsteckdose N und dem Netzschalter S verdeckt werden. Dadurch wird erfindungsgemäß der Tragrahmen 1 sicher und belastbar an der Wand W befestigt.

Ein weiterer wichtiger Unterschied zu den Ausführungsformen der Figuren 1a bis 2 ist die Art der Verbindung zwischen dem Zwischenmodul 2 und dem Tragrahmen 1.

Dazu sind in die Seitenwände 12 des letzteren jeweils eine vertikale Nute 132 eingelassen. Diese Nute 132 und damit auch das umgebende Profil sind relativ großzügig dimensioniert, da sie über die darin eingreifenden Schwenkzapfen 281 an den Enden der beiden Arme 23 und die beiden Haltezapfen 282, ebenfalls auf den Armen 23, das gesamte Gewicht des Zwischenmoduls 2 und des darauf aufgesetzten Kleingerätes K tragen sollen.

Ein weiterer Unterschied zu den Varianten der Figuren 1a bis 2 ist das Entfallen eines Fixierelementes 3. Stattdessen sollen sich von den Armen 23 die Zapfen 281 und 282 an der Vorderseite der Nuten 132 in den Seitenwänden 12 abstützen.

Damit das Einführen der Schwenkzapfen 281 in die Nut 132 frei von hochgenauem Zielen und Ausrichten und deshalb schnell und verschleißarm erledigt werden kann, sind die Nuten 132 an ihren oberen Enden trichterförmig erweitert. Weil der Querschnitt der Schwenkzapfen 281 kreisrund ist, kann das Zwischenmodul 2 in einem beliebigen Winkel zur Wand W stehen, wenn es in den Tragrahmen 1 eingeschoben werden soll. Wenn die Schwenkzapfen 281 erst einmal in die Nuten 132 eingeführt sind, so können sie auch als Schwenkachse benutzt werden, um das Zwischenmodul 2 allmählich in die Senkrechte zu verschwenken, parallel zur Wand W.

Die vorbeschriebene Schwenkfunktion ist sowohl für die Ausführungsvariante gemäß Figur 3a als auch gemäß Figur 3b vorgesehen. Beide Versionen unterscheiden sich durch die Art der Sicherung gegen das Abkippen des Zwischenmoduls 2.

In **Figur 3a** ist auf der "halben" Länge jeden Arms 23 jeweils ein Haltezapfen 282 angeformt. Wenn beim Einsetzen des Zwischenmoduls 2 die Schwenkzapfen 281 bereits ein Teilstück ihres Weges in der vertikalen Nut 132 absolviert haben, senken sich auch die Haltezapfen 282 zuerst in den Bereich der trichterförmigen Ausbuchtungen der Nut 132 ab. Die Trichter lenken und zentrieren sie dann erforderlichenfalls in den schmalen Teil der Nut 132 hinein.

In **Figur 3b** ist nur an die Enden der beiden Arme 23 jeweils ein Schwenkzapfen 281 angeformt. Letztere können vergleichsweise sehr tief in die vertikale Nut 132 abgesenkt werden, bevor das Zwischenmodul 2 unbedingt in eine senkrechte Position gebracht werden muss. Um es in dieser Stellung zu halten, ist an die Unterseite des Auflagebereichs 21 ein Verschluss 29 angeformt. Letzterer besteht in der eingezeichneten Ausführungsform aus einem federnden und abgewinkelten Metallstreifen mit einem angeformten, kleinen Griffstück. Alternativ ist jedoch auch das Anformen eines Kunststoffteils möglich und sinnvoll. Dieser Verschluss 29 greift hinter einen Halteriegel 15, der auf die Oberseite des Tragrahmens 1 angeformt oder aufgesetzt ist. Dadurch wird das Zwischenmodul mitsamt dem darauf aufgesetzten Kleingerät K zuverlässig gegen ein Abkippen nach vorne gesichert.

Die Unterschiede der beiden zuvor beschriebenen Versionen des Zwischenmoduls 2 zu den Ausführungsvarianten gemäß den Figuren 1a bis 2 sind, dass kein weiteres Fixierelement 3 benötigt und hantiert werden muss und deshalb das Einsetzen des Zwischenmoduls 2 schneller und sicherer möglich ist. Im Gegensatz dazu hat die erstgenannte Version ein besonders glattflächiges und daher pflegeleichtes Äußere.

Bei beiden Versionen gemäß den Figuren 3a und 3b ist dieselbe Art der Befestigung und Sicherung eines elektrischen Kleingerätes K vorgesehen. Diese Ausführungsform ist vor allem für plattenförmige Kleingeräte K wie zum Beispiel Smart-Phones und Fernbedienungen gedacht, die in den Figuren 3 nur mit ihrem strich-punktierten Umriss eingezeichnet sind. Deren untere, abgerundete Kante ruht in einem muldenförmigen Auflagebereich 21. An der rechten Seite ist eine Kippsicherung 22 angeformt, die eine Seitenkante des Kleingerätes K in einer Mulde aufnimmt. Wichtig ist, dass beide Mulden oder Rinnen wenigstens angenähert komplementär zu der abgerundeten Unterkante und der abgerundeten Seitenkante des Kleingerätes K geformt sind.

Um das Kleingerät K ganz sicher und zuverlässig in den Mulden des Auflagebereichs 21 und der Kippsicherung 22 zu halten, empfiehlt die Erfindung einen zusätzlichen Sicherungsarm 25. Dieser ist gelenkig im Winkel zwischen Auflagebereich 21 und Kippsicherung 22 befestigt. An seinem freien Ende ist eine Kralle 26 befestigt, die eine Ecke des Kleingerätes K umfasst. Damit sich Kleingeräte K von verschiedenen Größen und Proportionen in das Zwischenmodul 2 einsetzen lassen, ist vorzugsweise die Länge des Sicherungsarms 25 variabel; in der hier dargestellten Ausführung durch einen gabelförmigen, oberen Teil, der auf den Kanten eines da hinein passenden Unterteils gleitet. Durch die Kraft einer Spiralfeder wird das Oberteil des Sicherungsarms 25 und damit die daran befestigte Kralle 26 auf das Kleingerät K aufgedrückt. Dadurch wird es selbsttätig tief in die Mulden des Auflagebereichs 21 und der Kippsicherung 22 hineingeschoben, um dort sicher und ohne Verrutschen oder Abkippen fixiert zu werden.

Die gezeichnete Ausführungsform mit einer fest am Sicherungsarm 25 befestigten Kralle 26 ist in gewissen Grenzen für verschiedene Größen und Proportionen von rechteckigen Kleingeräten K einsetzbar. Wenn der Verschwenkwinkel des Sicherungsarms 25 bei allzu unterschiedlichen Proportionen der Kleingeräte K so groß wird, dass sich die Kralle 26 gegenüber Kleingeräten K mit extremen Proportionen verkantet, muss sie gelenkig am Sicherungsarm 25 befestigt werden. Dann wird die Kralle 26 beim Auflegen auf die Ecke des Kleingerätes K durch das Kleingerät K selbst in den passenden Winkel gedrückt und verschwenkt.

Eine etwas aufwendigere Bauart ist die gelenkige Befestigung der Kralle 26 an zwei Sicherungsarmen 25. Parallel zum ersten Sicherungsarm 25 wird ein zweiter Sicherungsarm 25 hinzugefügt und ebenfalls gelenkig am Auflagebereich 21 befestigt. Die Kralle 26 ist dann an den beiden Sicherungsarmen 25 gelenkig zu befestigen, so dass eine Parallelführung ähnlich wie zum Beispiel bei den Scheibenwischern an großen Omnibussen entsteht.

### Bezugszeichenliste

- K: elektrisches Kleingerät, von Zwischenmodul 2 gehalten
- N: Netzsteckdose, in Wand W eingelassen
- S: Netzschalter, in Wand W eingelassen
- W: Wand, Auflage für Tragrahmen 1
- 1: Tragrahmen, verbunden mit Zwischenmodul 2
- 11: Montageplatte, innen in Tragrahmen 1
- 12: Seitenwand des Tragrahmens 1
- 131: horizontale Nute in Seitenwand 12
- 132: vertikale Nute in Seitenwand 12
- 14: Zapfen auf Tragrahmen 1
- 15: Halteriegel an Tragrahmen 1
- 2: Zwischenmodul, trägt Kleingerät K
- 21: Auflagebereich am Zwischenmodul 2 für Kleingerät K
- 22: Kippsicherung am Zwischenmodul 2, hindert Kleingerät K am Abkippen
- 23: Arm an Zwischenmodul 2
- 24: Wanne im Zwischenmodul 2 zum Einlegen eines Kleingerätes K
- 25: Sicherungsarm am Zwischenmodul 2
- 26: Kralle am Sicherungsarm 25, umfasst Kleingerät K
- 27: Bohrung für Zapfen 14 in Zwischenmodul 2
- 281: Schwenkzapfen an Arm 23
- 282: Haltezapfen an Arm 23
- 29: Verschluss an Zwischenmodul 2
- 3: Fixierelement, drückt Arme 23 auf Tragrahmen 1
- 31: Öffnung in rahmenförmigem Fixierelement 3
- 32: Rippe an Fixierelement 3, in horizontale Nute 131 einzuschieben

## Patentansprüche

1. Halterung für ein elektrisches oder elektronisches Kleingerät (K), bestehend aus einem Tragrahmen (1),
- der an einer Wand (W) angeordnet ist und
- der zumindest teilweise wenigstens eine Netzsteckdose (N) und/oder einen Schalter (S) und/oder eine andere, fest montierte Elektrobaugruppe umgreift
und
- der mit wenigstens einem Zwischenmodul (2) verbunden ist, wobei das Zwischenmodul (2) einen Auflagebereich (21) für das Kleingerät (K) aufweist,
**dadurch gekennzeichnet, dass**
- der Tragrahmen (1) lösbar oder unlösbar mit dem Zwischenmodul (2) verbunden
ist und
- der Auflagebereich (21) am Zwischenmodul (2) wenigstens angenähert komplementär zu einem Teilbereich der Außenfläche des Kleingerätes (K) geformt ist.

2. Halterung nach Anspruch 1,
**dadurch gekennzeichnet, dass** auf das Zwischenmodul (2) ein mechanische Kippsicherung (22) aufgesetzt oder angeformt und/oder eine rutschhemmende Beschichtung oder Matte aufgebracht ist, die einen Teilbereich der Außenfläche des Kleingerätes (K) überdeckt, wenn letzteres auf dem Auflagebereich (21) aufliegt.

3. Halterung nach eine der vorhergehenden Ansprüche,
**dadurch gekennzeichnet, dass** an die Innenseite des Tragrahmens (1) eine Montageplatte (11) angeformt ist, die mit ihrer ersten Großfläche an die Wand (W) angedrückt wird, indem auf die zweite Großfläche der Montageplatte (11) ein Flansch oder ein Kragen angepresst wird, der mit der Netzsteckdose (N) verbunden ist.

4. Halterung nach dem vorhergehenden Anspruch 3,
**dadurch gekennzeichnet, dass** die Montageplatte (11) die Netzsteckdose (N) ringförmig umschließt.

5. Halterung nach einem der vorhergehenden Ansprüche,
**dadurch gekennzeichnet, dass**
an das Zwischenmodul (2) zwei Arme (23) angeformt oder angesetzt sind, die auf oder in den Tragrahmen (1)
- auf- oder einlegbar oder
- auf- oder einsteckbar oder
- ein- oder anhängbar oder
- einrastbar oder
- einschiebbar sind.

6. Halterung nach Anspruch 5, **dadurch gekennzeichnet, dass** die Arme (23) durch ein Fixierelement (3) an den Tragrahmen (1) andrückbar sind, wobei das Fixierelement (3) als ein Bügel oder eine Platte oder ein Rahmen ausgebildet sein kann, welche(r) in Zapfen (14) oder andere mechanische Elemente auf dem Tragrahmen (1) und/oder horizontale Nuten (131) oder vertikale Nuten (132) oder andere mechanische Elemente an den äußeren Seitenwänden (12) des Tragrahmens (1) aufschiebbar oder einschiebbar oder einrastbar oder einschraubbar oder anschraubbar oder einsteckbar oder anderweitig mechanisch verbindbar ist.

7. Halterung nach Anspruch 5,
**dadurch gekennzeichnet, dass**
die Arme (23) durch ein Fixierelement (3) an den Tragrahmen (1) andrückbar sind,
- wobei das Fixierelement (3) ein Rahmen ist, der mit wenigstens einer Öffnung (31) je eine Netzsteckdose (N) und/oder einen Netzschalter (S) abdeckt.

8. Halterung nach Anspruch 7,
**dadurch gekennzeichnet, dass**
auf der Innenfläche des Fixierelementes (3) verschiedene Linien aufgebracht oder Sollbruchlinien eingebracht sind, entlang derer die Öffnung (31) durch Schneiden, Sägen oder Brechen an den Umriss der Abdeckung der Netzsteckdose oder den Umriss des Netzschalters anpassbar ist.

9. Halterung nach wenigstens einem der vorhergehenden Ansprüche ,
**dadurch gekennzeichnet, dass**
das Zwischenmodul (2) eine Wanne (24) aufweist, in die ein Kleingerät (K) einlegbar und durch einen Abdeckrahmen oder einen Haltebügel oder einen Gurt oder eine andere Kippsicherung (22) gegen Abkippen oder Herausfallen sicherbar ist.

10. Halterung nach wenigstens einem der vorhergehenden Ansprüche ,
**dadurch gekennzeichnet, dass**
das Zwischenmodul (2) zur Einspannung eines etwa rechteckigen, plattenförmigen Kleingerätes (K)
- einen Auflagebereich (21) aufweist, der zu einer graden Kante und zu einer daran anschließenden Ecke des Kleingerätes (K) etwa komplementär geformt ist,
und
- einen Sicherungsarm (25) aufweist,
- der mit seinem ersten Ende schwenkbar in der Nähe des Auflagebereiches (21) befestigt ist und
- der an seinem zweiten Ende eine Kralle (26) trägt, welche diejenige weitere Ecke des Kleingerätes umschließt, die diagonal der im Auflagebereich (21) abgesicherten ersten Ecke des Kleingerätes (K) gegenüberliegt und
- die Länge des Sicherungsarm (25) auf die diagonale Abmessung des jeweils eingespannten Kleingerätes (K) einstellbar ist.

11. Halterung nach einem der vorhergehenden Ansprüche,
**dadurch gekennzeichnet, dass**
der Auflagebereich (21) des Zwischenmoduls (2) so weit über den Tragrahmen (1) hinausragt, dass ein Elektrokabel durch einen Durchlass im Auflagebereich (21) seitlich neben den Tragrahmen (1) geführt werden kann.

12. Halterung nach Anspruch 11
**dadurch gekennzeichnet, dass**
am Tragrahmen (1) ein zweites Zwischenmodul (2) befestigt ist, in welches das Elektrokabel aus dem ersten Zwischenmodul (2) hineinführbar ist und teilweise aufwickelbar und wieder hinausführbar ist oder mit einem Elektronikbaustein, wie z.B. einem Netzgerät verbindbar ist.

13. Halterung nach einem der vorhergehenden Ansprüche,
**dadurch gekennzeichnet, dass**
das Zwischenmodul (2) im Auflagebereich (21) einen Stecker oder eine Steckdose aufweist, in die ein dazu passendes Gegenstück eines elektronischen Kleingerätes (K) einsteckbar ist,
wobei die Steckdose oder der Stecker mit einem weiterführenden Elektrokabel oder mit einem im Zwischenmodul (2) eingebauten Elektronikbaustein verbunden ist Halterung nach Anspruch 13, **dadurch gekennzeichnet, dass**
am Zwischenmodul (2) elektrische Kontakte angeordnet sind, die beim Verbinden des Zwischenmoduls (2) mit dem Tragrahmen (1) elektrisch leitend mit komplementären Gegenkontakten verbunden werden, die in den Tragrahmen (1) eingebaut sind.

14. Halterung nach einem der vorhergehenden Ansprüche,
**dadurch gekennzeichnet, dass**
- als elektrisches Kleingerät (K) eine oder mehrere wiederaufladbare Batterien in das Zwischenmodul (2) einsetzbar sind
und
- das Zwischenmodul (2) im Auflagebereich (21) Kontaktplatten oder Kontaktfedern aufweist, die zu den Kontakten der Batterien komplementär geformt sind
und
- im Zwischenmodul (2) oder im Tragrahmen (1) ein Netzladegerät eingebaut ist, das mit den Kontaktplatten oder Kontaktfedern elektrisch leitend verbunden ist.

15. Halterung nach Anspruch 15,
**dadurch gekennzeichnet, dass**
die Kontaktplatten oder Kontaktfedern in verschiedene Positionen verschwenkbar oder verschiebbar sind, die an die Abmessungen genormter Batterien angepasst sind.

16. Halterung nach einem der vorhergehenden Ansprüche,
**dadurch gekennzeichnet, dass** der Auflagebereich (21) des Zwischenmoduls (2) zur Aufnahme von einem elektrischen Kleingerät(K) geformt und ausgestattet ist, welches
- als Mobiltelefon, Smartphone, Funktelefon, Smartwatch, Baby- Phone, Seniorennotruf oder anderes Kommunikationsgerät oder
- als Kleinkamera, Videokamera, Nachtsichtgerät, digitaler Bilderrahmen oder ein anderes Bild-Aufnahme oder -Wiedergabegerät oder
- als Rasierapparat, Zahnbürste oder ein anderes Hygiene- oder Körperpflegegerät oder
- als Radioempfänger, Fernseher, CD-Spieler, MP3-Player, Spielekonsole, Lautsprecher,Übertrager für Audiosignale zum Lautsprecher oder anderes Unterhaltungsgerät oder
- als Navigationsgerät oder Geschwindigkeitsanzeiger oder
- als Fahrradbeleuchtung, Taschenlampe, Blitzgerät, Nachtlicht oder andere Beleuchtungseinrichtung oder
- als Akkuschrauber, Ventilator, Schuhsohlenheizung, Briefaufschneider, Elektromesser, Rührwerk oder anderes Elektrohaushaltsgerät oder
- als Innenthermometer, Außenthermometer, Hygrometer, Luftdruckmessgerät, Wetterstation oder anderes Klimaerfassungsgerät oder
- als Luftreiniger mit Lüfter und/oder Ionisatoren und/oder Filter und/oder UV-Licht, Elektroverdampfer oder Elektrozerstäuber für Desodorantien, Duftstoffe oder Repellentien zur Insektenabwehr, Kühler oder Heizung oder als anderes Klimagerät oder
- als Türsprechanlage, Monitor für Haustürkamera oder andere Kameras oder
- als Alarmanlage, Panikschalter, Feuermelder, Fluchtwegbeschilderung oder anderes Nothilfsgerät oder
- als Bedienoberfläche, Display und oder Sensor für Rolladensteuerung, Smart Home, Heizung, Kühlung, Klimaanlage, Be- und Entlüftung, Solaranlage, Alarmanlage oder Photovoltaik oder
- zum Projizieren von Informationen auf die Wand wie z.B. Termine, Unterhaltung, Werbung oder Aufruf von Patienten bei Ärzten oder Wartenummern bei Ämtern oder
- als Display oder Projektor für Termine, e-Mail, Anrufe oder Postkastensensor, auch in Kombination mit RFID-Chip in Smartwatch, Armband oder Kleidung oder
- als RFID Modul oder als Biometrisches Modul zur Erfassung eines Fingerabdruckes oder zum Scannen der Retina zwecks Identifikation im Raum befindlicher Personen oder zur genauen Bestimmung der Position von Menschen und Robotern in Räumen oder
- als NFC-Tag zur automatischen Einschaltung von Radio, einer Musik-Playliste oder einer anderen Funktion beim Aufstecken eines Handys oder eines anderen Kleingerätes oder
- als Zeiterfassung oder Stechuhr oder
- als Werbe- oder Dekorationselement oder
- als elektrischer Generator dient, der durch manuellen Druck vom Nutzer auf einen Hebel oder auf eine Kurbel elektrische Energie erzeugt, oder
- als sog. Powerline-Modul oder Kabelfernseh-Modul zum Aufmodulieren oder Auskoppeln von Informationssignalen auf die Netzspannung oder
- als nichtmechanische und drahtlose Sperre für autonome Fahrzeuge wie zum Beispiel Saugroboter oder Flurförderfahrzeuge oder
- als Störsender
dient.
